# EUROPÄISCHE PATENTSCHRIFT

(11) **EP 0 975 158 B1**
(45) Veröffentlichungstag und Bekanntmachung des Hinweises auf die Patenterteilung: **17.09.2008**
(21) Anmeldenummer: 98113600.5
(22) Anmeldetag: 21.07.1998
(51) Int. Cl.: H04N 5/60

(54) **Audioquellenauswahlschaltung**
Circuit for selecting audio sources
Circuit de sélection des sources audio

(43) Veröffentlichungstag der Anmeldung: 26.01.2000
(73) Patentinhaber: Micronas GmbH, 79108 Freiburg i. Br. (DE)
(72) Erfinder: Winterer, Martin Dipl.-Phys., 79194 Gundelfingen (DE); Müller, Stefan Dipl.-Ing., 79108 Freiburg (DE); Hilpert, Thomas Dipl.-Ing., 79211 Denzlingen (DE)

(56) Entgegenhaltungen:
- EP-A- 0 464 328
- DE-A- 3 222 806
- JP-A- 55 128 976
- MICRONAS: "MSP 3400D, MSP 3410D, Multistandard Soundprocessors"[Online] 14. Mai 1999 (1999-05-14), Gefunden im Internet: URL:http://www.ortodoxism.ro/datasheets/Mi cronasIntermetall/mXtywsv.pdf> [gefunden am 2006-04-07]

## Beschreibung

Die Erfindung betrifft nach dem Oberbegriff des Anspruchs 1 eine Audioquellenauswahlschaltung für einen Audiosignalprozessor. Ein Audiosignalprozessor ist beispielsweise im Datenblatt der Firma Micronas Intermetall "MSP 3410D Multistandard Sound Processor, Edition Jan. 15, 1998, Order No. 6251-422-3PD ausführlich beschrieben. Das auf Seite 14 als Fig. 4-5 dargestellte Blockschaltbild "Audio Baseband Processing (DSP-Firmware)" enthält einen Baustein "Channel Source Select", der in Verbindung mit den zugehörigen Schaltungsblöcken ein Beispiel für eine derartige Audioquellenauswahlschaltung darstellt.

Bei der Vielzahl von Übertragungssystemen von Audiosignalen für sich alleine oder in Verbindung mit Fernsehsignalen, erweist sich die Anpassung der Ausgangskanäle bei einer Multistandardanwendung an die jeweilige Signalart als recht kompliziert. Denn neben den unterschiedlichen Audionormen, z.B. FM, AM, NICAM und anderen, insbesondere neuen Normen im Zusammenhang mit dem digitalen Femsehen, ist die jeweilige Signalart und die anzuschließende Wiedergabeeinrichtung zu berücksichtigen. Beides wird im folgenden unter dem Begriff Signalmodus zusammengefaßt. Die Signalart gibt an, ob es sich bei den wiederzugebenden Audiosignalen um Mono-, Stereo- oder unterschiedliche Sprachensignale handelt. Als Wiedergabeeinrichtung können Lautsprecher und Kopfhörer dienen. Unter Wiedergabeeinrichtungen soll hier im erweiternden Sinn auch der Anschluß von weiteren Geräten über sogenannte Audio-Video-Schnittstellen gemeint sein, z.B. über die bekannte "SCART"-Buchse. Es ist einleuchtend, daß bei einer direkten Lautsprecher- oder Kopfhörerwiedergabe niemals A- und B-Sprachensignale gleichzeitig im rechten und linken Tonkanal abgegeben werden dürfen. Andererseits ist es sinnvoll, wenn die Lautsprecher das A-Sprachensignal wiedergeben und über einen oder mehrere Kopfhörer das B-Sprachensignal gehört werden kann - oder umgekehrt. Werden die Signale mit ausreichender Qualität angeboten, dann sollte beim Vorhandensein von Stereosignalen automatisch auch auf diese umgeschaltet werden. Bei der Audio-Video-Schnittstelle, die ja nicht unmittelbar zur Wiedergabe führt, ist es sinnvoll, möglichst die ganze in den Audiosignalen liegende Information weiterzugeben oder abzuspeichem, gegebenenfalls also die vorhanden A- und B-Spracheninhalte. Schließlich gibt es in bestimmten Übertragungsnormen auch noch einen dritten Sprachenkanal, beispielsweise für sprachliche Minderheiten, der bei einer automatischen Audioquellenauswahlschaltung in einem Ausgangskanal sicher erfaßbar sein soll.

Die bekannten Audioquellenauswahlschaltungen enthalten nach einer von einer Steuereinrichtung gesteuerten Quellenauswahleinrichtung noch für Jeden Ausgangskanal eine Ausgangsmatrix. Diese wird ebenfalls von der Steuereinrichtung In Abhängigkeit von der Signalart und der angeschlossenen Wiedergabeelnrichtung gesteuert. Liefert die eine Audioquelle beispielsweise nur ein Monosignal, dann sorgt die Ausgangsmatrix dafür, daß das Monosignal auf beiden Kanalleitungen liegt, Liefert die Audioquelle jedoch ein Stereosignal, dann ist die jeweilige Ausgangsmatrix transparent geschaltet, beide Signalkomponenten können die Ausgangsmatrix also ungehindert passieren, Wenn die Kanalleitungen das A- und B-Sprachensignal enthalten, dann darf die Jeweilige Ausgangsmatrix nur transparent geschaltet werden, wenn eine SCART-Buchse angeschlossen ist, in den anderne Fällen sind beide Kanalleitungen entweder auf das A-oder B-Sprachensignal umzuschalten.

Aus dem bisher dargestellten Ist ersichtlich, daß schon bei Berücksichtigung weniger Varianten die Einstellung oder Programmierung der Steuereinrichtung sehr unübersichtlich wird. Sofern die Einstellung noch im Werk oder in der Service-Werkstatt erfolgt, ist der erforderliche Aufwand für die Einstellung oder Programmierung zwar lästig, aber immerhin möglich. Anders sieht es aus, wenn der Besitzer eines derartigen Multinormgerätes etwas an seiner Wiedergabe ändern möchte, beispielsweise einen Tausch der A- und B-Sprachensignale zwischen dem Lautsprecher- und Kopfhöreranschluß.

Es ist daher Aufgabe der Erfindung, eine möglichst intelligente Audioquellenauswahlschaltung anzugeben, die weitgehend selbständig die erforderlichen Umschaltungen vornimmt. Die Lösung dieser Aufgabe erfolgt durch eine Audioquellenauswahl schaltung nach Anspruch 1.

Für jede sinnvolle Wiedergabeeinrichtung wird dabei ein eigener Zwischenkanal gebildet, auch wenn die jeweilige Wiedergabeeinrichtung gar nicht angeschlossen oder vorhanden ist. Bei jedem dieser Zwischenkanäle werden dann entsprechend den möglichen Signalarten die einzelnen Einstellungen automatisch vorgenommen. Die jeweilige Signalart liefert beispielsweise ein mitübertragenes Kennungssignal. Für den Anwender ist nun nur noch die Zuordnung zwischen dem jeweiligen Ausgangskanal, an den die Wiedergabeeinrichtung angeschlossen ist, und dem zugehörigen Zwischenkanal herzustellen. Dies ist mittels einer einfachen Programmierung, beispielsweise mittels einer Menu-Führung, über die Fernbedienungseinrichtung leicht möglich.

Die Erfindung und vorteilhafte Ausgestaltungen werden nun anhand der Figuren der Zeichnung nähererläutert:
Fig. 1 zeigt schematisch im Blockschaltbild eine Audioquellenauswahlschaltung gemäß dem bekannten Stand der Technik und
Fig. 2 zeigt schematisch im Blockschaltbild ein Ausführungsbeispiel für eine Audioquellenauswahlschaltung nach der Erfindung.

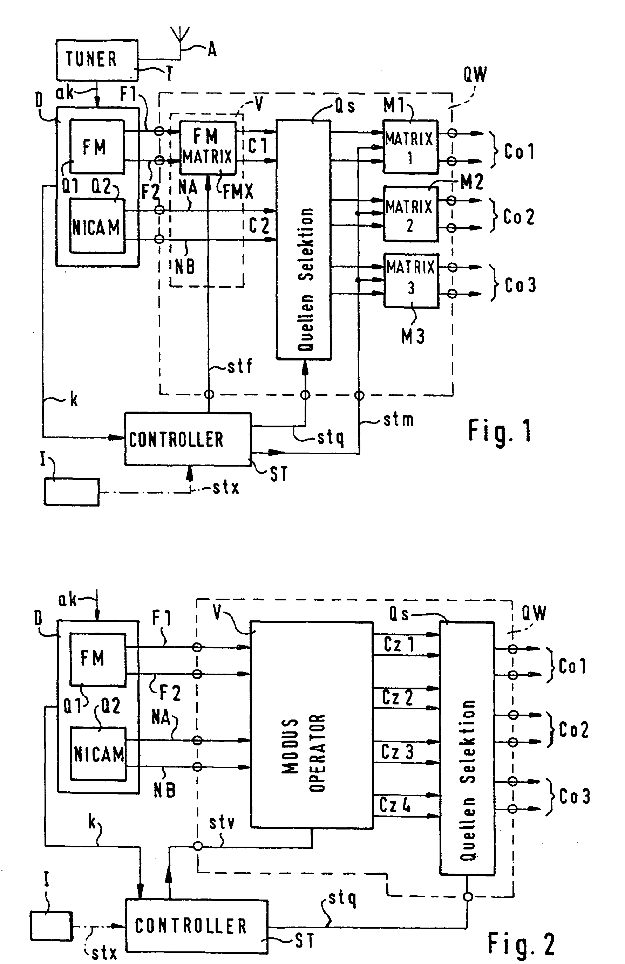

Fig. 1 zeigt eine bekannte Audioquellenauswahlschaltung QW, wie sie beispielsweise in der eingangsgenannten Firmendruckschrift als Teil eines Audiosignalprozessors beschrieben ist. Beispielsweise empfängt ein in einem Fernsehempfänger enthaltener Tuner T über eine Antenne A ein Femsehsignal, das neben dem Videosignal die Audiosignalkomponenten enthält. Diese werden herausgefiltert, digitalisiert und als Audiokomponenten ak einem Demodulator D zugeführt. Der Demodulator D enthält verschiedene Einrichtungen zur Demodulation der Audiokomponente ak, die sich an den verwendeten Übertragungsstandards orientieren. Beim FM-Standard liegt die Audioinformation auf einem ersten und einem zweiten Tonträger und beim NICAM-Standard auf einem ersten frequenzmodulierten Tonträger und als digitale Information auf dem eigentlichen NICAM-Kanal, ferner gibt es noch den AM-Standard und insbesondere in USA einen FM/AM-Standard. Weitere Varianten und Übertragungsstandards, auch im Hinblick auf das digitale Femsehen, erfordern weitere Demodulatoren oder adaptive Demodulatoren, deren Funktionsweise änderbar ist. Jeder dieser Demodulatoren kann als eine Audioquelle aufgefaßt werden, die an ihrem Ausgang Quellensignale abgibt. Im Ausführungsbeispiel entspricht der FM-Demodulator einer ersten Audioquelle Q1 und der NICAM -Demodulator einer zweiten Audioquelle Q2. Die Quellensignale der ersten Audioquelle Q1 sind die Quellensignale F1, F2 und die der zweiten Quelle Q2 die beiden NICAM-Signale NA, NB. Das Quellensignal F1 enthält aus Kompatibilitätsgründen ein Monosignal; die NICAM-Signale NA, NB dagegen nur ein getrenntes Rechts- und Linkssignal oder getrennte Sprachensignale A, B oder ein Monosignal in einem Kanal, dr andere Kanal enthält dann keine Information.

Welche Art von Signalen die jeweiligen Quellensignale enthalten liefert ein Kennungssignal k, das in der Audiokomponente ak mitenthalten ist. Dieses Kennungssignal wird in einer Steuereinrichtung ST ausgewertet und erzeugt dort Steuerdaten stf für eine FM-Matrix FMX in einer Verarbeitungseinrichtung V. Die FM-Matrix bildet aus den Quellensignalen F1, F2 ein Signalpaar, das einem ersten Kanal C1 entspricht, der auf den beiden Leitungen entweder die senderseitig ausgestrahlte Stereo- oder Bilingual-Information oder auf einer Leitung das Monosignal enthält. Die NICAM-Quellensignale NA, NB erfordem eine derartige Matrizierung nicht, weil die beiden Kanalinformationen wie angegeben getrennt übertragen werden. Sie bilden somit gleich einen zweiten Kanal C2. Die Verarbeitungseinrichtung V ist daher für den Kanal C2 transparent.

Der erste und zweite Kanal C1, C2 speist eine einstellbare Quellenauswahlschaltung Qs, die aus den zugeführten Signalpaaren diejenigen Signale auswählt, die letzten Endes die Ausgangskanäle Co1, Co2, Co3 bilden sollen. Ist beispielsweise an einen ersten Ausgangskanal Co1 ein Rechts/Links-Lautsprecherpaar anzuschließen, dann dürfen bei dem Vorhandensein von Bilingualsignalen A, B vom ersten oder zweiten Kanal C1, C2 entweder nur die A- oder nur die B-Sprachensignale auf das Lautsprecherpaar geschaltet werden. Diese Umschaltung erfolgt in einer Ausgangsmatrix M1 beispielsweise dadurch, daß das Signal der einen Kanalleitung auf beide Ausgänge des Kanals Co1 geschaltet wird. Liefert andererseits der erste Kanal C1 ein Stereosignal, dann kann die Ausgangsmatrix M1 transparent geschaltet werden. Ähnlich verhält es sich, wenn an den Ausgangskanal Co2 ein Kopfhörer angeschlossen werden soll. Die erforderlichen Umschaltungen werden dann durch eine zweite Ausgangsmatrix M2 durchgeführt. Wird an den dritten Ausgangskanal Co3 eine SCART-Buchse angeschlossen, dann führt eine dritte Ausgangsmatrix M3 die zugehörigen Umschaltungen aus. Die Steuerung der Ausgangsmatrizen erfolgt über Matrix-Steuerdaten stm aus der Steuereinrichtung ST.

Die einstellbare Quellenauswahlschaltung Qs wählt in Fig. 1 entweder den ersten Kanal C1 oder den zweiten Kanal C2 aus und gibt deren Signalpaare dann an die erste, zweite und dritte Ausgangsmatrix M1, M2, M3 weiter. Die Auswahl des ersten oder zweiten Kanals C1, C2 erfolgt über Quellen-Steuerdaten stq aus der Steuereinrichtung ST. Die Programmierung der Steuereinrichtung ST erfolgt über eine Programmiereinrichtung I, die beispielsweise auch eine Fernbedienung sein kann. Die der Programmierung dienenden Steuerdaten stx werden in der Steuereinrichtung ST gespeichert und erzeugen in Verbindung mit dem jeweiligen Kennungssignal k die Steuerdaten stf, stq, stm.

In der Fig.2, die die Erfindung zeigt, sind der Einfachheit halber die Funktionseinheiten, die identisch zu den Funktionseinheiten von Fig.1 sind, mit den gleichen Bezugszeichen versehen, wodurch Gleichheiten und Unterschiede deutlicher hervortreten und sich ferner die Beschreibung vereinfacht. Der Demodulator D enthält wieder als erste Quelle Q1 einen FM-Demodulator und als zweite Quelle Q2 einem NICAM-Demodulator, Die zugehörigen Quellensignale F1, F2, NA, NB sind einer Verarbeitungseinrichtung V zugeführt, die außer einer nicht dargestellten FM-Matrix FMX (wie in Fig.1), eine automatische Audiomoduseinstelleinrichtung enthält, die aus den Quellensignalen geeignete Zwischenkanäle Cz1, Cz2, Cz3, Cz4 nach einem quellen- und anwendungsbezogenen Modus erzeugt. Für jeden üblichen Wiedergabe-Anwendungsfall wird ein eigener Zwischenkanal zur Verfügung gestellt. Ebenso werden eigene Zwischenkanäle zur Verfügung gestellt, wenn spezielle quellenseitige Eigenschaften zu berücksichtigen sind, beispielsweise wenn eine der Quellen ein drittes Sprachensignal liefert. Die erforderlichen Umschaltungen in der Verarbeitungseinrichtung V sind durch Verarbeitungs-Steuerdaten stv aus der Steuereinrichtung ST gesteuert.

Die Zuordnung und Verbindung der an die Ausgangskanäle Co1, Co2, Co3 angeschlossenen Wiedergabeeinrichtungen mit den passenden Zwischenkanälen Cz1 bis Cz4 erfolgt wie in Fig. 1 über eine einstellbare Quellenauswahlschaltung Qs. Da die Zwischenkanäle bereits den richtigen Signalmodus aufweisen, können die Ausgangsmatrizen M1, M2, M3 von Fig. 1 entfallen. Dies erleichtert wie bereits angegeben erheblich die Programmierung der Steuereinrichtung ST, insbesonders wenn Änderungen vorgenommen werden sollen.

## Patentansprüche

1. Audioquellenauswahlschaltung (QW) für einen Audiosignalprozessor mit
- Eingängen für Quellensignale (F1, F2, NA, NB), die von mindestens einer Audioquelle (Q1, Q2,) bereitgestellt sind,
- einer Verarbeitungseinrichtung (V), die aus den Quellensignalen zusammengehörige Signalpaare bildet, die jeweils in einem Kanal zusammengefaßt sind,
- einer einstellbaren Quellenauswahleinrichtung (Qs), der eingangsseitig die Kanäle der Verarbeitungseinrichtung (V) zugeführt sind, und
- Ausgängen, die mit Signalausgängen der einstellbaren Quellenauswahleinrichtung (Qs) gekoppelt sind und jeweils einen Ausgangskanal (Co1, Co2, Co3) bilden,
**dadurch gekennzeichnet, daß**
- die Verarbeitungseinrichtung (V) eine automatische Audiomoduseinstelleinrichtung enthält, die aus den Quellensignalen (F1, F2, NA, NB) Zwischenkanäle (Cz1, Cz2, Cz3, Cz4) nach einem quellen- und anwendungsbezogenen Modus erzeugt, wobei in diesem Modus Signalart und die anzuschließende Wiedergabeeinrichtung zusammengefaßt sind, und wobei die Signalart angibt, ob es sich bei den wiederzugebenden Audiosignalen um Mono-, Stereo- oder unterschiedliche Sprachensignale handelt, und
- die Zwischenkanäle der einstellbaren Quellenauswahlschaltung (Qs) zuführt um aus den Zwischenkanälen mindestens einen als Ausgangskanal (Co1, Co2, Co3) auszuwählen,
- wobei die einstellbare Quellenauswahlschaltung lediglich die vom Anwender programmierte Zuordnung zwischen dem jeweiligen Ausgangskanal und dem zugehörigen Zwischenkanal herstellt, ohne eine Ausgangsmatrizierung vorzunehmen,
- wobei wenigstens ein erster, zweiter, und dritter Zwischenkanal (Cz1, Cz2, Cz3) vorhanden ist und der erste Zwischenkanal (Cz1) in einem Bilingualmodus nur ein A-Sprachsignal, in einem Stereo-Modus jedoch ein Stereo signal führt, der zweite Zwischenkanal (Cz2) in einem Bilingualmodus nur ein B-Sprachsignal, in einem Stereo-Modus jedoch ein Stereo signal führt, und der dritte Zwischenkanal (Cz3) in einem Bilingualmodus ein A-Sprachsignal und ein B-Sprachsignal, in einem Stereo-Modus jedoch ein Stereo signal führt.

2. Audioquellenauswahlschaltung (QW) nach Anspruch 1, bei der ein vierter Zwischenkanal (Cz4) vorhanden ist, der ein drittes Sprachsignal, in einem Stereo-Modus jedoch ein Stereo signal führt, wenn eine der Quellen ein drittes Sprachensignal liefert.

## Claims

1. An audio source selection circuit (QW) for an audio signal processor, comprising
- inputs for source signals (F1, F2, NA, NB) provided by at least one audio source (Q1, Q2),
- a processing device (V) which forms pairs of signals from the source signals, each of said pairs of signals being combined in one channel,
- a settable source selection logic (Qs) to which the channels of the processing device (V) are applied, and
- outputs coupled to signal outputs of the settable source selection logic (Qs) and each forming one output channel (Co1, Co2, Co3),
**characterized in that**
- the processing device (V) comprises an automatic audio mode setting device which generates suitable intermediate channels (Cz1, Cz2, Cz3, Cz4) from the source signals (F1, F2, NA, NB) according to a source-and application-related mode in which the type of signal and the reproducing device to be connected are combined, the type of signal indicating whether the audio signals to be reproduced are mono signals, stereo signals or different language signals, and
- applies the intermediate channels to the settable source selection logic (Qs) to select at least one of them as the output channel (Co1, Co2, Co3),
- wherein the settable source selection circuit only establishes the user-programmed association between the respective output channel and the associated intermediate channel without performing any output matrixing, and
- wherein at least a first, a second, and a third intermediate channel (Cz1, Cz2, Cz3) are provided, the first intermediate channel (Cz1) carrying only an A-language signal in a bilingual mode, but a stereo signal in a stereo mode, the second intermediate channel (Cz2) carrying only a B-language signal in a bilingual mode, but a stereo signal in a stereo mode, and the third intermediate channel (Cz3) carrying an A-language signal and a B-language signal in a bilingual mode, but a stereo signal in a stereo mode.

2. An audio source selection circuit (QW) as claimed in claim 1, wherein a fourth intermediate channel (Cz4) is provided which carries a third language signal, but a stereo signal in a stereo mode, when one of the sources supplies a third language signal.

## Revendications

1. Circuit de sélection de sources audio pour un processeur de signal Audio comportant :
- Des entrées de signaux source (F1, F2, NA, NB) qui sont fournies par au moins une source Audio (Q1, Q2) ;
- Un dispositif de traitement (V) qui met en forme des paires de signaux chacune dans un canal,
- Un circuit réglable de sélection de sources (Qs) qui est alimenté en entrée par les canaux du dispositif de traitement (V), et
- Des sorties qui sont couplées aux sorties de signal du circuit réglable de sélection de sources (Qs) et dont chacune génère un canal de sortie (Co1, Co2, Co3),
**caractérisé en ce que**
- le dispositif de traitement (V) comporte un dispositif de réglage automatique de mode audio, qui génère des canaux intermédiaires appropriés (Cz1, Cz2, Cz3, Cz4) sur la base des signaux de source (F1, F2, NA, NB) en fonction d'un mode correspondant aux sources et / ou aux applications, de sorte que dans ce mode, le type de signal et le dispositif de reproduction correspondant sont rassemblés et de sorte que le type de Signal indique si le signal doit être géré comme signal audio à reproduire en tant que signal de langue, signal mono, signal stéréo ou autre, et
- le circuit réglable de sélection de sources (Qs) sélectionne parmi les canaux intermédiaires au moins l'un des canaux intermédiaires comme canal de sortie (Co1, Co2, Co3),
- de sorte que le circuit réglable de sélection de sources affecte l'un des canaux de sortie à un canal intermédiaire correspondant sans utiliser de matriçage de sortie uniquement en fonction de l'application programmée,
- de sorte qu'il existe au moins un premier, un second et un troisième canal intermédiaire (Cz1, Cz2, Cz3) et que le premier canal intermédiaire (Cz1) alimente seulement un signal de langue A, dans un mode stéréo pour un signal Stéréo dans un mode bilingue, que le second canal intermédiaire (Cz2) alimente seulement un signal de langue B, dans un mode stéréo pour un signal Stéréo dans un mode bilingue, et que le troisième canal intermédiaire (Cz3) alimente seulement un signal de langue A et un signal de langue B, dans un mode stéréo pour un signal Stéréo dans un mode bilingue,

2. Circuit de sélection de sources audio selon la revendication 1, **caractérisé en ce que** il existe un quatrième canal intermédiaire (Cz4) qui alimente un troisième signal de langue dans un mode stéréo pour un signal Stéréo, quand l'une des sources fournit un troisième signal de langue.
